(19) Europäisches Patentamt
European Patent Office
Office européen des brevets

(11) **EP 2 699 778 B1**

(12) **FASCICULE DE BREVET EUROPEEN**

(45) Date de publication et mention
de la délivrance du brevet:
**22.04.2015 Bulletin 2015/17**

(21) Numéro de dépôt: **12708918.3**

(22) Date de dépôt: **14.02.2012**

(51) Int Cl.:
*F02B 37/24* *(2006.01)*     *F02B 39/16* *(2006.01)*
*F02B 77/08* *(2006.01)*     *F02D 23/00* *(2006.01)*
*F02D 41/22* *(2006.01)*     *G01M 15/05* *(2006.01)*

(86) Numéro de dépôt international:
**PCT/FR2012/050315**

(87) Numéro de publication internationale:
**WO 2012/143630 (26.10.2012 Gazette 2012/43)**

(54) **PROCEDE DE DIAGNOSTIC DE DEFAILLANCE D'UN MOTEUR SURALIMENTE ET MOTEUR SURALIMENTE**

VERFAHREN ZUR FEHLERDIAGNOSE EINES AUFGELADENEN MOTORS UND AUFGELADENER MOTOR

FAULT DIAGNOSIS METHOD OF SUPERCHARGED MOTOR AND SUPERCHARGED MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.04.2011 FR 1153439**

(43) Date de publication de la demande:
**26.02.2014 Bulletin 2014/09**

(73) Titulaire: **Renault S.A.S.**
**92100 Boulogne-Billancourt (FR)**

(72) Inventeur: **FONTVIEILLE, Laurent**
**F-91190 Gif-sur-Yvette (FR)**

(74) Mandataire: **Renou, Jean-François et al**
**Renault S.A.S.**
**TCR GRA 2 36 - Sce 00267**
**1 avenue du Golf**
**78084 Guyancourt Cedex (FR)**

(56) Documents cités:
**FR-A1- 2 948 415         GB-A- 2 345 941**
**US-A1- 2003 084 886     US-A1- 2003 145 591**
**US-A1- 2006 123 782**

**Description**

DOMAINE TECHNIQUE DE L'INVENTION

L'invention concerne un procédé de diagnostic de défaillance d'un moteur à combustion interne suralimenté, équipé d'un turbocompresseur à géométrie variable, monté par exemple sur un véhicule automobile.

ART ANTERIEUR

La suralimentation en air d'un moteur permet d'augmenter les performances du moteur en admettant, pour la combustion du carburant, une masse d'air plus grande que dans un moteur atmosphérique de cylindrée équivalente.

Un dispositif de suralimentation peut comprendre un turbocompresseur, comportant d'une part un compresseur qui alimente le moteur en air à une pression supérieure à la pression atmosphérique, et d'autre part, une turbine traversée par les gaz d'échappement du moteur.

La puissance fournie à la turbine par ces gaz d'échappement est transmise, par l'intermédiaire d'un arbre, au compresseur qui comprime l'air aspiré de l'environnement extérieur à une pression dite pression de suralimentation.

De nombreux moteurs sont équipés d'un turbocompresseur à géométrie variable (également connu sous l'acronyme TGV). La turbine est alors équipée d'ailettes à orientation variable, dont la position angulaire est pilotée par un actionneur pour modifier la section de passage des gaz d'échappement dans la turbine, de façon à faire varier la puissance prélevée par la turbine sur ces gaz et ainsi à modifier la pression de suralimentation.

Avec la tendance actuelle à augmenter la performance spécifique des moteurs, les valeurs de pression de suralimentation demandées aux turbocompresseurs sont de plus en plus élevées. Les turbocompresseurs sont très sollicités mécaniquement, ce qui affecte leur fiabilité. Il est donc important de contrôler précisément leur état de fonctionnement et de diagnostiquer l'apparition de toute défaillance mécanique de manière, par exemple, à limiter les performances du moteur et/ou à alerter le conducteur de la nécessité d'une réparation.

D'autre part, ces défaillances mécaniques sont souvent précédées d'un défaut de régulation de la pression de suralimentation du turbocompresseur, qui peut conduire à un dépassement du niveau légal des émissions polluantes du moteur. Les normes OBD (de l'anglais : On Board Diagnosis) relatives au diagnostic embarqué à bord des véhicules imposent d'alerter le conducteur d'un tel dépassement. Il est donc important de diagnostiquer la défaillance ou le dysfonctionnement d'un turbocompresseur pour répondre à ces normes.

On connaît plusieurs procédés de diagnostic de défaillance qui sont fondés sur des mesures de signaux mécaniques provenant d'un turbocompresseur et la comparaison de leur niveau par rapport à un seuil. Le dépassement du seuil est alors représentatif d'un endommagement mécanique du turbocompresseur.

Par exemple, la publication DE-A-102007052453 divulgue un procédé qui consiste à mesurer les vibrations émises par le corps d'un turbocompresseur et à en comparer le niveau obtenu par rapport à un niveau de référence mesuré sur un turbocompresseur intact. Cette méthode est destinée à mettre en évidence une usure de butée axiale d'un turbocompresseur.

D'une manière voisine, la publication DE-A-102007036936 divulgue une méthode d'acquisition du déplacement axial et/ou radial des ailettes ou de la roue de !a turbine d'un turbocompresseur, et de sa transformation par des méthodes mathématiques, en un signal utilisable pour diagnostiquer un défaut de rotation de l'arbre d'un turbocompresseur à l'intérieur de ses paliers.

Ces méthodes permettent de diagnostiquer certaines défaillances mécaniques d'un turbocompresseur, mais elles ne disent rien des performances du turbocompresseur, c'est-à-dire de sa capacité à comprimer l'air à la pression de suralimentation nécessaire à l'atteinte d'un couple moteur requis par le conducteur du véhicule par l'enfoncement de la pédale d'accélération.

Pour pallier cet inconvénient, d'autres méthodes de diagnostic, basées sur des mesures directes de paramètres de fonctionnement des turbocompresseurs et plus particulièrement sur une valeur de pression représentative de la pression de suralimentation, ont été proposées.

Par exemple, la publication FR-A-2923262 divulgue un procédé de détection d'une avarie dans un système de suralimentation en air basée sur la mesure en continu de la pression des gaz d'échappement en amont de la turbine, consistant à :

- vérifier que le moteur se trouve dans un état de régulation dans lequel le turbocompresseur est commandé grâce à la pression avant turbine Pavt ;
- mesurer périodiquement cette pression avant turbine Pavt :
- pour chaque mesure, calculer la valeur $\Delta Pavt = Pavt - Pavt\_$, dans laquelle $Pavt\_$ est une valeur de consigne de la pression avant turbine ;
- si $\Delta Pavt$ est supérieure ou égale à zéro, lui retrancher une valeur prédéterminée dite de « bande morte » BM et garder les valeurs positives, sinon remplacer par zéro ;
-   calculer une intégrale au cours du temps de l'écart de boucle de pression I = ∫|ΔPavt-BMI ;
-   si I est supérieure à un seuil prédéterminé, diagnostiquer un état de défaillance.

Un tel procédé permet de mettre en évidence des problèmes fonctionnels (c'est-à-dire de capacité à suralimenter) d'un turbocompresseur, et non pas seulement des dommages mécaniques. Toutefois, il n'est actif que lorsque la pression de suralimentation est régulée en boucle fermée pour répondre à la requête de couple émise par le conducteur, ce qui n'est pas toujours le cas. En particulier, la zone régime-charge du cycle d'homologation européen NEDC, dans laquelle les émissions polluantes du moteur sont calculées, recouvre souvent une large zone de fonctionnement régime-charge du moteur dans laquelle la suralimentation n'est activée qu'en boucle ouverte. Le diagnostic décrit précédemment y est donc inopérant et ne répond pas aux normes OBD qui imposent de faire un diagnostic dans toutes les conditions de fonctionnement du moteur.

Un tel procédé présente plusieurs autres inconvénients :

-   Il n'est efficace que lorsque la consigne de pression de suralimentation varie assez lentement,
-   Il souffre d'un manque de précision, car le seuil de détection (c'est-à-dire : la valeur de la bande morte) doit être assez élevé pour tenir compte des variations normales de la précision de la régulation.
-   Il ne peut diagnostiquer les défaillances du turbocompresseur que lorsque la pression de suralimentation ne parvient pas à être régulée autour de sa consigne. En d'autres termes, il ne peut diagnostiquer aucun défaut tant que la pression de suralimentation est maintenue autour de sa consigne grâce à une orientation des ailettes qui parvient à compenser une perte de rendement anormale de la turbine ou du compresseur.

## RESUME DE L'INVENTION

L'invention vise à remédier aux défauts des procédés de diagnostic de défaillance connus, en proposant une stratégie de détection qui est indépendante des performances et de l'activation de la régulation en boucle fermée de la pression de suralimentation, précise et fonctionnant de manière continue.

Elle propose pour cela de calculer une première et une seconde valeurs estimées de la puissance de la turbine, de deux manières distinctes :

-   La première valeur estimée est calculée à partir d'un premier ensemble de paramètres associés au circuit d'admission d'air du moteur, comprenant au moins la pression de l'air à l'entrée du compresseur, la pression de suralimentation, le débit massique de l'air traversant le compresseur et la température de l'air à l'entrée du compresseur.
-   La seconde valeur estimée est calculée à partir d'un second ensemble de paramètres dont certains sont associés au circuit d'échappement des gaz brûlés du moteur. Cet ensemble comprend au moins la pression des gaz d'échappement à la sortie de la turbine, le débit massique des gaz traversant la turbine, la température des gaz à l'entrée de la turbine, une position de l'actionneur actionnant les ailettes de la turbine, et le régime de rotation du turbocompresseur, c'est-à-dire le régime de rotation de son arbre, auquel le compresseur et la turbine sont liés en rotation.

L'invention prévoit de calculer le rapport de la seconde valeur estimée divisée par la première valeur estimée, et de comparer ce rapport à un seuil prédéfini, au-delà duquel on conclut à une défaillance du moteur suralimenté. On alerte alors le conducteur, par exemple en allumant un voyant au tableau de bord du véhicule.

L'invention propose aussi un moteur à combustion interne équipé d'un turbocompresseur à géométrie variable, apte à la mise en oeuvre du procédé de diagnostic de défaillance.

## BREVE DESCRIPTION DES FIGURES

D'autres caractéristiques et avantages de la présente invention apparaîtront à la lecture de la description suivante d'un mode de réalisation non limitatif de celle-ci, en se reportant aux dessins annexés dans lesquels,

-   la figure 1 est une représentation schématique d'un moteur à combustion interne suralimenté, d'un turbocompresseur à géométrie variable qui équipe ce moteur, et d'un certain nombre de pièces constituant le circuit d'admission d'air du moteur ainsi que le circuit d'échappement des gaz brûlés dans le moteur, et
-   la figure 2 est un diagramme qui illustre un mode de réalisation du procédé de diagnostic de défaillance selon l'invention.

DESCRIPTION DETAILLEE DES FIGURES

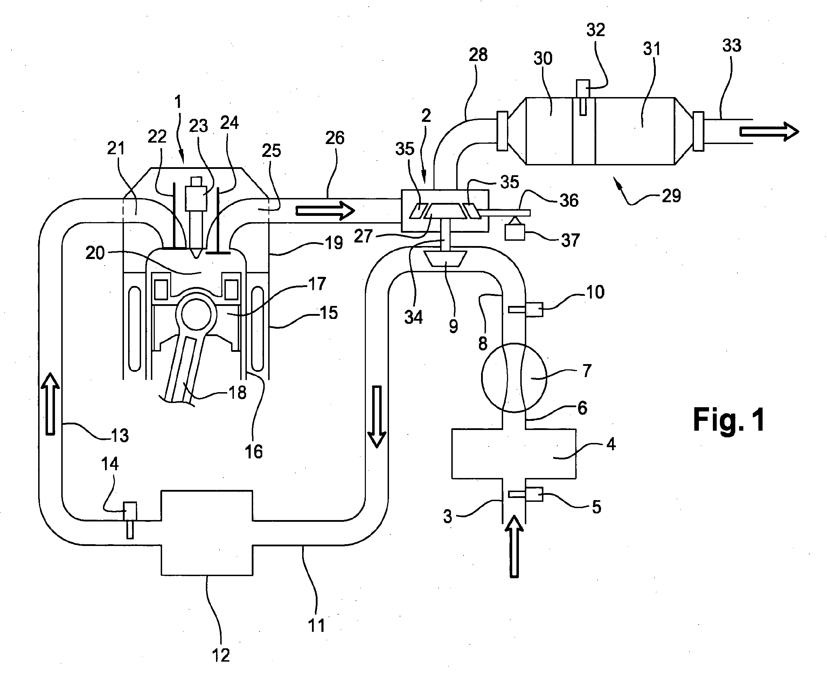

La figure 1 représente schématiquement un moteur à combustion interne 1, monté par exemple sur un véhicule automobile (non-représenté), équipé d'un turbocompresseur à géométrie variable 2, et associé à un certain nombre de pièces composant le circuit d'admission d'air du moteur et le circuit d'échappement des gaz brûlés du moteur.

Le circuit d'admission d'air comporte un premier tuyau d'arrivée d'air frais 3 dont une extrémité amont débouche par exemple sous le capot du véhicule, et dont l'autre extrémité aval est reliée à un filtre à air 4. Le tuyau d'arrivée d'air frais 3 est muni d'un premier capteur de pression d'air 5.

Un deuxième tuyau d'air 6, dit tuyau de liaison filtre-débitmètre 6, relie le filtre à air 4 à un débitmètre 7 qui mesure le débit massique d'air aspiré sous le capot du véhicule.

Un troisième tuyau d'air 8, dit tuyau de liaison débitmètre-turbocompresseur 8, relie le débitmètre 7 à l'entrée du compresseur 9 du turbocompresseur 2. Ce tuyau de liaison débitmètre-turbocompresseur 8 est muni d'un capteur de température d'air 10 agencé au voisinage de l'entrée du compresseur 9.

La sortie du compresseur 9 est reliée à une extrémité amont d'un quatrième tuyau d'air 11, dit tuyau de liaison turbocompresseur-refroidisseur 11. L'autre extrémité aval de ce tuyau de liaison turbocompresseur 11 est reliée à un refroidisseur d'air 12 (aussi connu sous l'acronyme RAS, d'après les majuscules de l'expression Refroidisseur d'Air Suralimenté).

Un cinquième tuyau d'air 13, dit tuyau de liaison refroidisseur-moteur 13, relie le RAS 12 à l'entrée du moteur 1, par exemple à un répartiteur d'air d'admission. Ce tuyau de liaison refroidisseur-moteur 13 est muni d'un deuxième capteur de pression d'air 14.

Le moteur 1, dont ici un seul cylindre est représenté en coupe, comporte de manière connue :

- un carter-cylindres 15 délimitant au moins un cylindre 16,
- un piston 17 apte à coulisser dans le cylindre 16 sous l'action d'une bielle 18,
- une culasse 19 délimitant au moins une chambre de combustion 20 pourvue d'un conduit d'admission d'air 21, d'une soupape d'admission 22, d'un injecteur 23 pour l'injection de carburant, par exemple du gazole, dans la chambre 20, d'un conduit d'échappement d'air 24 et d'une soupape d'échappement 25.

Le circuit d'échappement des gaz brûlés du moteur comporte un collecteur d'échappement 26 qui relie la sortie du moteur 1 à l'entrée de la turbine 27 du turbocompresseur 2. La sortie de la turbine 27 est reliée à une extrémité amont d'un tuyau échappement des gaz brûlés 28, dit tuyau de liaison turbocompresseur-pot catalytique 28. L'autre extrémité de ce tuyau de liaison 28 est reliée à l'entrée d'un dispositif de dépollution 29, par exemple un pot catalytique 29 à quatre voies, qui se présente ici sous la forme d'un catalyseur d'oxydation 30 et d'un filtre à particules 31 monté à distance du catalyseur d'oxydation 30, entre lesquels est logé un troisième capteur de pression d'air 32. La sortie du dispositif de dépollution 29 est reliée à une ligne d'échappement 33 du véhicule.

Le turbocompresseur 2 comprend le compresseur 9, qui fait partie du circuit d'admission en air du moteur 1, et la turbine 27, qui fait partie du circuit d'échappement des gaz brûlés du moteur 1. Le turbocompresseur comporte un arbre 34 auquel le compresseur 9 et la turbine 27 sont liés en rotation.

Le turbocompresseur 2 comprend des ailettes 35 à orientation variable, dont l'inclinaison permet de faire varier la section de passage des gaz à l'intérieur de la turbine 27. L'orientation des ailettes 35 est commandée par un actionneur 36, par exemple une tige 36. Un moyen de détermination 37, par exemple un capteur, permet de mesurer une valeur représentative de l'orientation des ailettes 35. Cette valseur peut être une position de l'actionneur 36, par exemple le déplacement axial de la tige 36.

D'une manière connue, le mode de fonctionnement du moteur 1 est le suivant. De l'air provenant du capot du véhicule, à la pression atmosphérique $P_{atmo}$, parcourt le circuit d'admission du moteur 1 dans le sens des flèches. Il est d'abord filtre dans le filtre à air 4, puis compressé par le compresseur 9, refroidi ensuite dans le RAS 12, et admis dans les chambres de combustion 20 du moteur 1 via la pipe d'admission 21 lorsque la soupape d'échappement 22 est ouverte.

En fonction du régime du moteur $N_{mot}$ et d'une consigne de couple moteur $C_{mot}$ traduisant l'enfoncement de la pédale d'accélération (non-représentée) du véhicule par le conducteur, un calculateur (non-représenté) du moteur détermine un débit massique de carburant $W_{carb}$ à injecter dans chaque chambre de combustion 20, et commande l'ouverture de l'injecteur 23 de façon à injecter le carburant quand le piston 17 se trouve au voisinage du point mort haut de combustion à l'intérieur du cylindre 16.

Les gaz brûlés résultant de la combustion dans la chambre 20 du carburant avec l'air sont expulsés de la chambre 20 pendant le temps d'échappement, la soupape d'échappement 24 étant ouverte. Les gaz passent par le collecteur d'échappement 26 et ils traversent ensuite la turbine 27 dont ils sortent détendus, c'est-à-dire à une pression plus faible qu'à l'entrée de la turbine 27.

La pression des gaz d'échappement à la sortie de la turbine 27 est d'autant plus faible, et l'énergie fournie par ces gaz à la turbine 27 est d'autant plus grande, que l'orientation des ailettes 35 réduit la section de passage des gaz à travers la turbine 27. L'orientation des ailettes 35 est par exemple commandée en boucle ouverte par le calculateur du moteur 1 en fonction par exemple de la consigne de couple moteur $C_{mot}$.

L'énergie de détente des gaz d'échappement est récupérée par le turbine 27 et transmise, par l'intermédiaire de l'arbre 34, au compresseur 9 pour la compression de l'air, à l'admission du moteur.

Les gaz d'échappement détendus sont évacués verts le pot catalytique 29 puis, après élimination des polluants, sont rejetés dans l'atmosphère par le pot d'échappement 33.

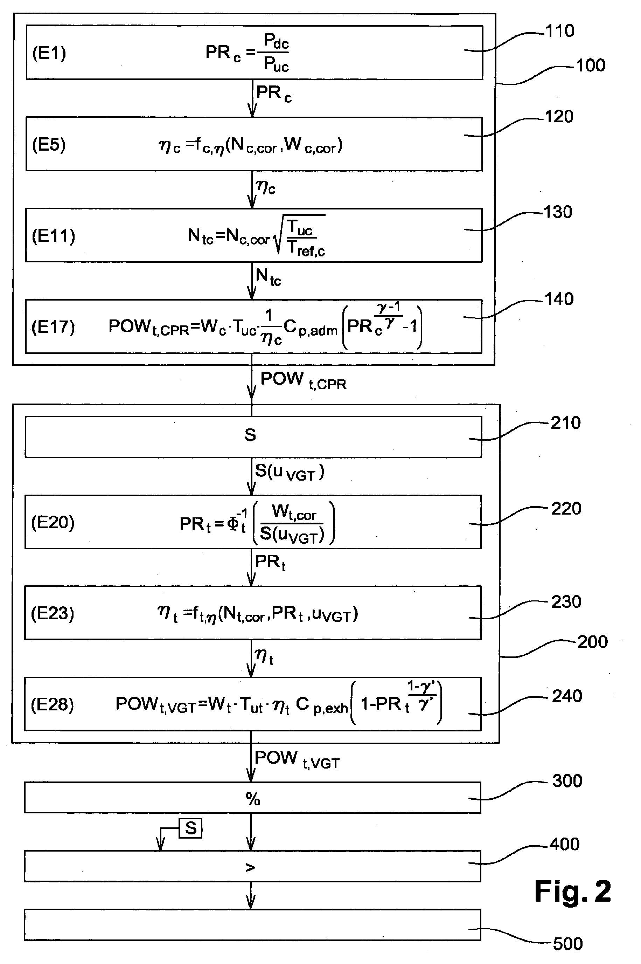

La figure 2 présente un diagramme illustrant un exemple de procédé de diagnostic de défaillance d'un moteur 1 à combustion interne suralimenté équipé d'un turbocompresseur 2 à géométrie variable selon l'invention.

Calcul d'une première valeur estimée de la puissance de la turbine

Le procédé comporte une première étape 100 de calcul d'une première valeur estimée de la puissance de la turbine $POW_{t,CPR}$ (exprimée en Watts) à partir d'un premier ensemble de paramètres associés au circuit d'admission d'air du moteur 1, cet ensemble comprenant au moins :

a) la pression $P_{uc}$ de l'air à l'entrée du compresseur,
b) la pression $P_{dc}$ de l'air à la sortie du compresseur, dite aussi pression de suralimentation,
c) le débit massique $W_c$ de l'air traversant le compresseur, et
d) la température $T_{uc}$ de l'air à l'entrée du compresseur.

L'étape 100 permet aussi, au cours d'une sous-étape 130, de calculer une valeur estimée du régime de rotation du turbocompresseur $N_{tc}$ (exprimé par exemple en tours par minute), qui peut avantageusement faire fonction de donnée d'entrée pour l'étape de calcul 200 comme il sera expliqué plus loin.

L'étape 100 comprend une première sous-étape 110 de calcul du taux de compression $PR_c$ du compresseur 9, défini comme le rapport entre la pression $P_{dc}$ de l'air à la sortie du compresseur divisée par la pression $P_{uc}$ de l'air à l'entrée du compresseur selon l'équation (E1):

$$(\text{E1}) \quad PR_c = \frac{P_{dc}}{P_{uc}}$$

Par exemple, la pression $P_{uc}$ à l'entrée du compresseur 9 peut être calculée comme la différence entre la pression atmosphérique $P_{atmo}$ (mesurée par le capteur de pression 5) et les pertes de charges, c'est-à-dire la chute de pression, dans le filtre à air 4, selon l'équation (E2) :

$$(\text{E2}) \quad P_{uc} = P_{atmo} - f_{faa}(W_c)$$

dans laquelle l'expression $f_{faa}(W_c)$ représente les pertes de charges dans le filtre à air 4 sous la forme d'une fonction $f_{faa}$ du débit massique d'air $W_c$ (mesuré par le débitmètre 7), qui peut être prédéterminée par des essais sur le filtre à air 4, puis stockée dans le calculateur du moteur 1.

Par exemple, la pression $P_{dc}$ à la sortie du compresseur 9 peut être calculée comme la somme de la pression $P_{spg}$ de l'air à la sortie du RAS (mesurée par le deuxième capteur de pression 14) et des pertes de charges, c'est-à-dire de la chute de pression, dans le RAS 12, selon l'équation (E3) :

$$(\text{E3}) \quad P_{dc} = P_{spg} + f_{RAS}(W_c)$$

dans laquelle l'expression $f_{RAS}(W_c)$ représente Ses pertes de charge dans le RAS 12 sous la forme d'une fonction $f_{RAS}$ du débit $W_c$. Cette fonction peut être prédéterminée par des essais sur le RAS 12 puis stockée dans le calculateur du moteur 1.

L'étape 100 comprend une deuxième sous-étape 120 lors de laquelle on détermine le rendement du compresseur 9, défini comme le rapport entre la puissance absorbée par l'air comprimé (c'est-à-dire : la puissance reçue par l'air au cours de sa compression dans le compresseur 9), divisée par la puissance que le compresseur 9 reçoit de l'arbre 34. Cette sous-étape 120 est fondée sur le modèle suivant.

Les fabricants de turbocompresseurs 1 caractérisent habituellement les performances d'un compresseur 9 par deux relations. La première relation relie le taux de compression $PR_c$ du compresseur 9 au régime de rotation du compresseur et au débit massique d'air traversant le compresseur 9. La seconde relation relie également le rendement du compresseur $\eta_c$ au régime de rotation du compresseur et au débit massique d'air traversant le compresseur 9.

Ces relations sont généralement fournies sous forme de cartographies $f_{c,n}$ et $f_{c,\eta}$ à deux entrées, pour la plage de régime et de débit de fonctionnement du compresseur 9, dans les conditions de référence choisies par le fabricant pour établir ces caractérisations au banc d'essais. Plus précisément, le fabricant fixe à l'avance les conditions de température et de pression en amont du compresseur 9, respectivement à des valeurs $T_{ref,c}$ et $P_{ref,c}$ qui lui sont propres, et il cartographie les deux relations fournissant le taux de compression $PR_c$ et le rendement $\eta_c$ pour des régimes de compresseur 9, dits régimes de compresseur de référence $N_{c,cor}$, et des débits de compresseur 9, dits débits de compresseur de référence $W_{c,cor}$ mesurés dans ces conditions, sous la forme de deux équations (E4) et (E5) :

$$(E4) \quad PR_c = f_{c,\Pi}\left(N_{c,cor}, W_{c,cor}\right)$$

et

$$(E5) \quad \eta_c = f_{c,\eta}\left(N_{c,cor}, W_{c,cor}\right)$$

Pour estimer le taux de compression $PR_c$ et/ou le rendement $\eta_c$ correspondant à un régime de turbocompresseur $N_{tc}$ et/ou à un débit $W_c$ mesurés dans des conditions autres que les conditions de référence, on détermine leurs voleurs corrigées, c'est-à-dire qu'on calcule les valeurs que ce régime et/ou ce débit prendraient dans les conditions de référence.

Cette correction peut s'exprimer par les deux équations (E6) et (E7) :

$$(E6) \quad N_{c,cor} = N_{tc}\sqrt{\frac{T_{ref,c}}{T_{tc}}}$$

et

$$(E7) \quad W_{c,cor} = W_c\sqrt{\frac{T_{tc}}{T_{ref,c}}\frac{P_{ref,c}}{P_{tc}}}$$

Les équations (E6) et (E7) peuvent se transformer respectivement sous la forme des équations (E8) et (E9) suivantes :

$$(E8) \quad PR_c = f_{c,\Pi}\left(N_{tc}\sqrt{\frac{T_{ref,c}}{T_{tc}}}, W_c\sqrt{\frac{T_{tc}}{T_{ref,c}}\frac{P_{ref,c}}{P_{tc}}}\right)$$

et

$$(E9) \quad \eta_c = f_{c,\eta}\left(N_{tc}\sqrt{\frac{T_{ref,c}}{T_{tc}}}, W_c\sqrt{\frac{T_{tc}}{T_{ref,c}}\frac{P_{ref,c}}{P_{tc}}}\right)$$

La cartographie $f_{c,\Pi}$ décrite, par l'équation (E4) étant prédéterminée et stockée dans le calculateur, on prédétermine et on stocke dans le calculateur une cartographie inverse $f_{Nt}$ qui permet, réciproquement, de déduire $N_{c,cor}$ des valeurs de $PR_c$ et de $W_{c,cor}$ selon une équation (E10) :

$$(E10) \quad N_{c,cor} = f_{Nt}\left(PR_c, W_{c,cor}\right)$$

Selon le modèle qui vient d'être décrit, la sous-étape 120 comprend des sous-sous-étapes lors desquelles on calcule :

- le débit corrigé $W_{c,cor}$ par l'équation (E7),
- le régime $N_{c,cor}$ de rotation du compresseur corrigé par l'équation (E10), et
- le rendement du compresseur $\eta_c$ par l'équation (E5).

L'étape 100 comprend une troisième sous-étape 130 lors de laquelle on calcule une valeur estimée $N_{tc}$ du régime du turbocompresseur par l'équation (E11) :

$$\text{(E11)} \quad N_{tc} = N_{c,cor}\sqrt{\frac{T_{uc}}{T_{ref,c}}} \quad .$$

L'étape 100 comprend une quatrième sous-étape 140 de calcul de la première valeur estimée $POW_{t,CPR}$ de la puissance de la turbine 27 à partir du régime corrigé $N_{c,cor}$ de rotation du compresseur, du débit corrigé $W_{c,cor}$ du compresseur, du taux de compression $PR_c$, de la température $T_{uc}$ de l'air à l'entrée du compresseur et du débit $W_c$ du compresseur. La sous-étape 140 se fonde sur le modèle suivant :

Le rendement du compresseur $\eta_c$ ayant été défini plus haut comme le rapport de la puissance absorbée par l'air comprimé $POW_{air,CPR}$ au cours de sa compression, divisée par la puissance du compresseur $POW_c$ que le compresseur 9 reçoit de l'axe 34, et le rendement $\eta_c$ du compresseur ayant été calculé par l'équation (E5), on modélise la puissance absorbée par les gaz comprimés $POW_{air,CPR}$ en appliquant la première loi de la thermodynamique et en assimilant l'air admis à un gaz parfait, par l'équation (E13) :

$$\text{(E13)} \quad POW_{air,CPR} = W_c T_{uc} c_{p,adm}\left(PR_c^{\frac{\gamma-1}{\gamma}} - 1\right)$$

dans laquelle :

- $c_{p,adm}$ désigne la valeur de la capacité calorifique à pression constante de l'air. On prend par exemple $c_{p,adm}$ = 1015 J/(kg°K).
- $\gamma$ désigne le rapport entre la capacité calorifique à pression constante $c_{p,adm}$ divisée par la capacité calorifique à volume constant $c_{v,adm}$ de l'air admis. On prend par exemple : $\gamma$ = 1,4.

La puissance du compresseur $POW_c$ s'exprime alors par l'équation (E14) :

$$\text{(E14)} \quad POW_c = W_c T_{uc}\frac{1}{\eta_c}c_{p,adm}\left(PR_c^{\frac{\gamma-1}{\gamma}} - 1\right)$$

La puissance de la turbine $POW_{t,CPR}$ peut ensuite être reliée à la puissance du compresseur $POW_c$ et au régime $N_{tc}$ du turbocompresseur à partir d'une équation (E15) de bilan de puissance entre la turbine 27 et le compresseur 9 :

$$\text{(E15)} \quad \frac{d}{dt}\left(\frac{1}{2}J\omega_{TC}^2\right) = POW_t - POW_c$$

, équation dans laquelle $J$ désigne l'inertie de l'axe 34 et du compresseur 9 (exprimée en kg/m²), et $\omega_{TC}$ la vitesse de rotation du turbocompresseur en tours/seconde, qui est égale à $\left(\frac{\pi}{30}\right)N_{tc}$ si $N_{tc}$ est exprimée en tours/minute.

L'équation (E15) peut se réécrire sous la forme :

7

$$(E16) \quad POW_{t,CPR} = POW_c + (\frac{\pi}{30})^2 J N_{tc} \frac{dN_{tc}}{dt}$$

Dans la pratique, des mesures comparatives de puissance montrent qu'on peut négliger le terme $(\frac{\pi}{30})^2 J N_{tc} \frac{dN_{tc}}{dt}$, et on assimile la première valeur estimée $POW_{t,CPR}$ à la puissance du compresseur $POW_c$ calculée par l'équation (E14). Cette dernière équation se transforme en l'équation (E17) :

$$(E17) \quad POW_{t,CPR} = W_c T_{uc} \frac{1}{\eta_c} c_{p,adm} \left( PR_c^{\frac{\gamma-1}{\gamma}} - 1 \right)$$

La sous-étape 140 est une sous-étape de calcul de la première valeur estimée $POW_{t,CPR}$ de la puissance de la turbine par l'équation (E17).

Calcul d'une seconde valeur estimée de la puissance de la turbine

Le procédé comporte une deuxième étape 200 de détermination de la seconde valeur estimée $POW_{t,VGT}$ de la puissance de la turbine 27 estimée à partir d'un second ensemble de paramètres, dont certains sont associés au circuit d'échappement des gaz brûlés du moteur 1. Cet ensemble de paramètres comprend au moins :

e) la pression $P_{dt}$ des gaz à la sortie de la turbine,
f) le débit massique $W_t$ des gaz traversant la turbine,
g) la température $T_{ut}$ des gaz à l'entrée de la turbine,
h) la position $B_{VGT}$ de l'actionneur 36 actionnant les ailettes 35, et
i) le régime de rotation $N_{tc}$ du turbocompresseur 19.

La pression $P_{dt}$ des gaz d'échappement à la sortie de la turbine peut être assimilée à la pression des gaz mesurée par le troisième capteur de pression 32, en négligeant les pertes de charge du catalyseur d'oxydation 30. Cela évite de mesurer la pression des gaz d'échappement par un capteur placé à la sortie de la turbine 27. Le température élevée du turbocompresseur risquerait en effet d'endommager rapidement un tel capteur.

Pour la même raison, il est difficilement envisageable de monter un débitmètre à la Sortie de la turbine 27. On peut calculer le débit massique $W_t$ de gaz traversant la turbine comme étant la somme du débit $W_c$ massique d'air introduit dans le moteur 1 et du débit massique de carburant $W_{carb}$ déterminé par le calculateur du moteur 1.

La température $T_{ut}$ en amont de la turbine peut être déterminée en fonction de chaque point de fonctionnement régime-charge du moteur 1, c'est-à-dire pour chaque valeur de régime $N_{mot}$ et de couple $C_{mot}$. Cette relation est, par exemple, cartographiée au préalable lors de la mise au point du moteur 1, en faisant un balayage de régime $N_{mot}$ et de couple $C_{mot}$.

Le régime de rotation $N_{tc}$ du turbocompresseur peut être déterminé par calcul, plutôt qu'être mesuré par un capteur supplémentaire. Ce calcul provient par exemple de la sous-opération 130,

L'étape 200 comprend une première sous-étape 210 de détermination de la valeur prise par une fonction $S(u_{VGT})$ de la position $u_{VGT}$ de l'actionneur 36. Cette sous-étape 210 repose sur le modèle suivant,

L'invention propose de modéliser le débit des gaz traversent la turbine 27 dans des conditions de température de référence $T_{ref,t}$ des gaz à l'entrée de la turbine et de pression de référence $P_{ref,t}$ des gaz à la sortie de la turbine correspondant aux valseurs utilisées par le fabricant du turbocompresseur 2 pour caractériser la puissance et le rendement de la turbine 27.

Ce modèle calcule le débit, qui est un débit de référence ou débit corrigé $W_{t,cor}$, comme le produit de la fonction $S(u_{VGT})$ ne dépendant que de la position $u_{VGT}$ de l'actionneur 36, par une fonction $\phi_t(PR_t)$, et ne dépendant que du taux de détente $PR_t$ de la turbine 16, c'est-à-dire du rapport $\dfrac{P_{dt}}{P_{ut}}$ entre la pression $P_{dt}$ des gaz à la sortie de la turbine divisée par la pression $P_{ut}$ des gaz à l'entrée de la turbine. Ce modèle se présente sous la forme d'une équation (E18) :

$$(E18) \quad W_{t,cor} = S(u_{VGT})\phi_t(PR_t)$$

La fonction $\phi_t(PR_t)$ peut par exemple être une fonction du type Barré de Saint-Venant régissant un débit gazeux à travers une striction, c'est-à-dire sous forme de l'équation (E19) :

$$(E19) \quad \phi_t(PR_t) = \sqrt{PR_t^{-\frac{2}{\gamma'}} - PR_t^{-\frac{\gamma'+1}{\gamma'}}} \sqrt{PR_t} ,$$

dans laquelle $\gamma'$ désigne le rapport de la capacité calorifique à pression constante des gaz $c_{p,exh}$ *divisée* par la capacité calorifique à volume constant $c_{v,exh}$ des gaz. On prend par exemple : $\gamma' = 1,4$.

Réciproquement, la connaissance du débit de référence (ou débit corrigé) $W_{t,cor}$ et de la position de l'actionneur $u_{VGT}$ permet de déterminer le taux de détente $PR_t$ de la turbine par l'équation (E20) :

$$(E20) \quad PR_t = \phi_t^{-1}\left(\frac{W_{t,cor}}{S(u_{VGT})}\right)$$

dans laquelle $\phi_t^{-1}$ désigne la fonction inverse de la fonction

$$\phi_t(x) = \sqrt{x^{-\frac{2}{\gamma'}} - x^{-\frac{\gamma'+1}{\gamma'}}} \sqrt{x} .$$

La fonction $S(u_{VGT})$ est prédéfinie sous forme d'une cartographie, par exemple par la méthode suivante.

On équipe au banc d'essais un turbocompresseur 2 avec un débitmètre 12, un capteur de pression des gaz à l'entrée de la turbine $P_{ut}$, un capteur de pression $P_{ref,t}$ des gaz à la sortie de la turbine et un capteur de température $T_{ref,t}$ des gaz à l'entrée de la turbine. On fait varier le débit $W_{t,cor}$ dans les conditions de référence $P_{ref,t}$ et $T_{ref,t}$, et on relève les valeurs de pression $P_{ut}$ des gaz à l'entrée de la turbine dans ces conditions. A partir de la pression $P_{ut}$, on déduit le taux de détente $PR_t$ dans les conditions de référence comme égal au rapport $\dfrac{P_{ref,t}}{P_{ut}}$, puis on obtient $\phi_t(PR_t)$ par l'équation (E19), et enfin on calcule $S(u_{VGT})$ à partir de l'équation (E18), Cette cartographie S établie au banc d'essais est stockée dans le calculateur du moteur 1.

La sous-étape 210 consiste à calculer la valeur *de $S(u_{VGT})$ à* partir de la mesure de la position de l'actionneur $u_{VGT}$ en utilisant la cartographie S stockée dans le calculateur du moteur.

L'étape 200 comprend une deuxième sous-étape 220 lors de laquelle on détermine le taux de détente $PR_t$ de la turbine dans les conditions mesurées de température $T_{ut}$ à l'eritrée de la turbine 16 et de pression $P_{dt}$ à la sortie de la turbine 16. Cette sous-étape 220 comprend des sous-sous-étapes lors desquelles on calcule :

- le débit massique de référence (ou débit corrigé) $W_{t,cor}$ traversant la turbine 27, c'est-à-dire celui qui traverserait la turbine 27 dans les conditions de référence $T_{ref,t}$ et $P_{ref,t}$, par l'équation (E21) :

$$(E21) \quad W_{t,cor} = W_t \sqrt{\frac{T_{ut}}{T_{ref,t}} \frac{P_{ref,t}}{P_{dt}}}$$

et

- le taux de détente $PR_t$ de la turbine par l'équation (E20).

L'étape 200 comprend une troisième sous-étape 230 de calcul du rendement de la turbine $\eta_t$, c'est-à-dire le rapport de la puissance que la turbine 27 transmet à l'axe 34, divisée par la puissance fournie par, les gaz d'échappement détendus à la turbine 27. Cette sous-étape repose sur le modèle suivant :

Comme pour le compresseur 9, les fabricants de turbocompresseurs 2 caractérisent habituellement les performances d'une turbine 27 par deux cartographies $f_{t,w}$ et $f_{t,\eta}$.

Une première cartographie de débit $f_{t,w}$ de la turbine relie le débit des gaz traversant la turbine 27 au régime de rotation de la turbine, au taux de détente $PR_t$ de la turbine et à la position $u_{VGT}$ de l'actionneur. Une seconde cartographie de rendement $f_{t,\eta}$ de la turbine relie également le rendement de la turbine $\eta_t$, au régime de rotation de la turbine, au taux de détente $PR_t$ de la turbine et à la position $u_{VGT}$ de l'actionneur.

Ces cartographies à trois entrées sont généralement établies dans des conditions de référence choisies par le fabricant pour établir toutes ces caractérisations au banc d'essais. Plus précisément, le fabricant fixe à l'avance les conditions de température $T_{ref,t}$ à l'entrée de la turbine et de pression $P_{ref,t}$ à la sortie de la turbine qui lui sont propres. Il cartographie les deux relations fournissant le débit de référence $W$ traversant la turbine (c'est-à-dire déterminé dans ces conditions de référence) et le rendement $\eta$ pour des régimes de référence $N_{t,cor}$ de la turbine mesurés dans ces conditions, des taux de détente $PR_t$ de la turbine et des positions $u_{VGT}$ de l'actionneur, sous la forme de deux équations (E22) et (E23):

$$(E22) \quad W_{t,cor} = f_{t,W}\left(N_{t,cor}, PR_t, u_{VGT}\right)$$

et

$$(E23) \quad \eta_t = f_{t,\eta}\left(N_{t,cor}, PR_t, u_{VGT}\right)$$

dans lesquelles le régime de référence de la turbine $N_{t,cor}$ peut se déduire du régime de rotation du turbocompresseur $N_{tc}$ grâce à l'équation (E24):

$$(E24) \quad N_{t,cor} = N_{tc}\sqrt{\frac{T_{ref,t}}{T_{ut}}}$$

Les deux équations (E22) et (E23) peuvent se transformer respectivement en :

$$(E25) \quad W_{t,cor} = f_{t,W}\left(N_{tc}\sqrt{\frac{T_{ref,t}}{T_{ut}}}, PR_t, u_{VGT}\right)$$

et

$$(E26) \quad \eta_t = f_{t,\eta}\left(N_{tc}\sqrt{\frac{T_{ref,t}}{T_{ut}}}, PR_t, u_{VGT}\right)$$

Selon le modèle qui vient d'être décrit, la sous-étape 230 comprend des sous-sous-étapes lors desquelles on calcule:

- la valeur du régime de la turbine corrigé par l'équation (E24), la valeur du régime $N_{tc}$ du turbocompresseur pouvant provenir de la sous-opération 130, et
- le rendement de la turbine par l'équation (E23).

L'étape 200 comprend une quatrième sous-étape 240 de calcul de la seconde valeur estimée $POW_{t,VGT}$ de la puissance de la turbine 27 à partir du débit massique $W_t$ des gaz traversant la turbine, du taux de détente $PR_t$, de la température $T_{ut}$ des gaz à l'entrée de la turbine et du rendement $\eta_t$ de la turbine. La sous-étape 240 se fonde sur le modèle suivant.

Le rendement $\eta_t$ de la turbine ayant été défini plus haut comme le rapport de la puissance $POW_{t,VGT}$ la turbine 27 transmit à l'axe 34, divisée par la puissance $POW_{gaz,VGT}$ **fournie** à la turbine 27 par les gaz détendus, et ayant été précédemment calculée par l'équation (E23), on modélise alors la puissance fournie par les gaz détendus $POW_{gaz,VGT}$ appliquant la première loi de la thermodynamique et en assimilant les gaz brûlés à un gaz parfait, par l'équation (E27) :

$$(E27) \quad POW_{gaz,VGT} = W_t T_{ut} c_{p,exh} \left( 1 - PR_t^{\frac{1-\gamma}{\gamma}} \right)$$

dans laquelle :

- $c_{p,exh}$ désigne la capacité calorifique à pression constante des gaz (exprimée en J/(kg°K) ). On prend par exemple $c_{p,exh}$ 1150 J/(kg°K).
- $\gamma^1$ désigne le rapport entre la capacité calorifique à pression constante $c_{p,exh}$ et la capacité calorifique à volume constant $c$ des gaz. On prend par exemple $\gamma'$ =1,4.

La seconde valeur estimée $POW_{t,VGT}$ de la puissance de la turbine se calcule alors par l'équation (E28) :

$$(E28) \quad POW_{t,VGT} = W_t T_{ut} \eta_t c_{p,exh} \left( 1 - PR_t^{\frac{1-\gamma}{\gamma}} \right)$$

La sous-étape 240 consiste à réaliser ce dernier calcul selon l'équation (E28).

Les deux estimations de la puissance de la turbine $POW_{t,CPR}$ et $POW_{VGT}$ calculées respectivement à l'étape 100 et 200 du procédé selon l'invention sont les données d'entrée pour l'étape 300 du procédé. Lors de cette étape 300, on calcule le rapport de puissance $\varepsilon_t = \dfrac{POW_{t,VGT}}{POW_{t,CPR}}$,

En l'absence de défaillance du turbocompresseur 2, c'est-à-dire quand le rendement de la turbine $\eta_t$ du compresseur $\eta_c$ sont ceux que les cartographies prédisent pour un turbocompresseur intact conforme à la production, et en l'absence d'erreurs de mesures de paramètres (pression, température, etc.) de toute nature, ce rapport $\varepsilon_t$ est théoriquement égal à 1. En cas de défaut de la suralimentation (par exemple une perte de rendement de la turbine 27), le rapport de puissance $\varepsilon_t$ devient supérieur à 1.

Le procédé comprend une quatrième étape 400 de comparaison du rapport $\varepsilon_t$ par rapport à un seuil S. Le seuil est choisi, par exemple, à partir d'une série de mesures et de calculs préalables effectués sur un échantillon statistiquement représentatif de turbocompresseurs 2 présentant une perte de rendement $\eta_t$, $\eta_c$ jugée à la limite de l'acceptable par le fabricant du turbocompresseur en fonction de ses critères de conception.

Le procédé comprend une cinquième étape 500 d'alerte du conducteur (par exemple en allumant un voyant au tableau de bord du véhicule) lorsque le rapport de puissance $\varepsilon_t$ dépasse le seuil 5.

En résumé, l'invention propose un procédé de diagnostic de défaillance d'un moteur 1 à combustion interne suralimenté, équipé d'un turbocompresseur 2 comportant

- un compresseur 9 comportant une entrée reliée à l'air extérieur, et une sortie à l'admission du moteur 1,
- une turbine 27 dont l'entrée est reliée à un collecteur d'échappement 26 du moteur 1, et une sortie, et
- des ailettes 35 à orientation variable actionnées par un actionneur 36, par exemple une tige 36, pour faire varier la section de passage des gaz d'échappement dans la turbine 27,

le compresseur 9 et la turbine 27 étant liés en rotation par un arbre 34 du turbocompresseur 2,

Selon cette invention, le procédé comprend :

- une première étape 100 de calcul d'une première valeur estimée $POW_{t,CPR}$ de la puissance de la turbine 27 à partir d'un premier ensemble de paramètres comprenant au moins :

    a) la pression $P$ de l'air à l'entrée du compresseur,
    b) la pression de suralimentation $P_{dc}$.
    c) le débit massique $W_c$ de l'air traversant le compresseur, et
    d) la température $T_{uc}$ de l'air à l'entrée du compresseur.

- une deuxième étape 200 de calcul d'une seconde valeur estimée $POW_{t,VGT}$ de la puissance de la turbine 27 à partir d'un second ensemble de paramètres comprenant au moins :

  b) la pression $P_{dt}$ des gaz à la sortie de la turbine,
  c) le débit massique $W_t$ des gaz traversant la turbine,
  d) la température $T_{ut}$ des gaz à l'entrée de la turbine,
  e) une position $u_{VGT}$ de l'actionneur 36, et
  f) le régime de rotation $N_{tc}$ du turbocompresseur 19.

  - une troisième étape 300 de détermination du rapport de puissance $\varepsilon_t$ de la seconde valeur estimée $POW_{t,VGT}$ divisée par la première valeur estimée $POW_{t,CPR}$,
  - une quatrième étape 400 de comparaison du rapport de puissance $\varepsilon$, avec un seuil S, et
  - une cinquième étape 500 de diagnostic de défaillance de défaillance du moteur 1 lorsque le rapport $\varepsilon_t$ est supérieur au seuil S.

L'invention propose également un moteur à combustion interne 1 suralimenté pour la mise en oeuvre d'un tel procédé, équipé d'au moins un moyen de détermination 37 d'un paramètre $u_{VGT}$ représentatif de la position des ailettes 35, par exemple la position $u_{VGT}$ d'un actionneur 36, telle que le déplacement axial $u_{VGT}$ d'une tige 36.

Cette invention présente de nombreux avantages :

- une efficacité du diagnostic quelle que soit la vitesse de variation de la consigne de pression de suralimentation $P_{dc}$
- la possibilité de mettre en oeuvre le diagnostic lorsque la pression de suralimentation $P_{dc}$ est régulée en boucle ouverte, et
- la possibilité de diagnostiquer une perte de rendement d'un turbocompresseur 2 alors même que la pression de suralimentation $P_{dc}$ peut encore être atteinte pour répondre à la requêté de couple $C_{mot}$ du moteur, c'est-à-dire à un stade très précoce où le conducteur ne ressent pas encore de perte de performance du véhicule,

**Revendications**

1. Procédé de diagnostic de défaillance d'un moteur (1) à combustion interne suralimenté, équipé d'un turbocompresseur (2) comportant ;

   - un compresseur (9) comportant une entrée reliée à l'air extérieur, et une sortie reliée à l'admission du moteur (1),
   - une turbine (27) comportant une entrée reliée à un collecteur d'échappement (26) du moteur (1), et une sortie, et
   - des ailettes (35) à orientation variable, actionnées par un actionneur (36) pour faire varier la section de passage des gaz d'échappement dans la turbine (27),

   la turbine (27) et le compresseur (9) étant liés en rotation par un arbre (34) commun,
   **caractérisé en ce qu'**il comprend :

   - une première étape (100) de calcul d'une première valeur estimée $(POW_{t,CPR})$ de la puissance de la turbine (27) à partir d'un premier ensemble de paramètres comprenant au moins :

     a) la pression $(P_{uc})$ de l'air à l'entrée du compresseur,
     b) la pression de suralimentation $(P_{dc})$,
     c) le débit massique $(W_c)$ de l'air traversant le compresseur, et
     d) la température $(T_{uc})$ de l'air à l'entrée du compresseur,

   - une deuxième étape (200) de calcul d'une seconde valeur estimée $(POW_{t,VGT})$ de la puissance de la turbine (27) à partir d'un second ensemble de paramètres comprenant au moins :

     e) la pression $(P_{dt})$ des gaz à la sortie de la turbine,
     f) le débit massique $(W_t)$ des gaz traversant la turbine,
     g) la température $(T_{ut})$ des gaz à l'entrée de la turbine,
     h) une position $(u_{VGT})$ de l'actionneur (36) actionnant les ailettes (35), et
     i) le régime de rotation $(N_{tc})$ du turbocompresseur (19).

- une troisième étape (300) de détermination d'un rapport de puissance ($\varepsilon_t$) calculé comme le rapport de la seconde valeur estimée ($POW_{t,VGT}$) de la puissance de la turbine, divisée par la première valeur estimée ($POW_{t,CPR}$) de la puissance de la turbine,
- une quatrième étape (400) de comparaison du rapport de puissance ($\varepsilon_t$) avec un seuil (S), et
- une cinquième étape (500) de diagnostic de défaillance du moteur (1) lorsque le rapport de puissance ($\varepsilon_t$) est supérieur au seuil (S).

2. Procédé selon la revendication 1, **caractérisé en ce que** la première valeur estimée ($POW_{t,CPR}$) de la puissance de la turbine est calculée comme le rapport d'une valeur calculée de la puissance absorbée ($OW_{air,CPR}$) par l'air comprimé par le compresseur, divisée par une valeur calculée du rendement ($\eta$) du compresseur.

3. Procédé selon la revendication 2, **caractérisé en ce que** la puissance absorbée ($POW_{air,CPR}$) par l'air comprimé est calculée par l'équation (E13) $POW_{air,CPR} = W_c T_{uc} c_{p,adm}\left( PR_c^{\frac{\gamma-1}{\gamma}} - 1 \right)$, dans laquelle $c_{p,adm}$ désigne la capacité calorifique à pression constante de l'air, $\gamma$ le rapport de la capacité calorifique à pression constante de l'air $c_{p,adm}$ divisée par la capacité calorifique à volume constant $\varepsilon_{v,adm}$ de l'air, et $PR_c$ le taux de compression du compresseur calculé comme le rapport $\dfrac{P_{dc}}{P_{uc}}$.

4. Procédé selon la revendication 2 ou 3, **caractérisé en ce que** le rendement ($\eta_c$) du compresseur est calculé par une cartographie de rendement ($f_{c,\eta}$) du compresseur à deux entrées, à partir d'une valeur calculée d'un régime corrigé ($N_{c,cor}$) du compresseur et d'une valseur calculée d'un débit d'air corrigé ($W_{c,cor}$).

5. Procède selon la revendication 4, **caractérisé en ce que** le débit corrigé ($W_{c,cor}$) du compresseur est calculé par l'équation (E7) $W_{c,cor} = W_c \sqrt{\dfrac{T_{uc}}{T_{ref,c}} \dfrac{P_{ref,c}}{P_{uc}}}$, dans laquelle $T_{ref,c}$ et $P_{ref,c}$ désignant respectivement des valeurs constants de température de référence et de pression de référence du compresseur, propres à la cartographie de rendement ($f_{c,\eta}$) du compresseur

6. Procédé selon la revendication 4 ou 5, **caractérisé en ce que** le régime corrigé ($N_{c,cor}$) du compresseur est calculé, par une cartographie de régime ($f_{Nt}$) du compresseur à deux entrées, à partir du taux de compression ($PR_c$) du compresseur et du débit d'air corrigé ($W_{c,cor}$).

7. Procédé selon l'une quelconque des revendications précédentes, **caractérisée en ce que** la seconde valeur estimée ($POW_{t,VGT}$) de la puissance de la turbine est calculée comme le produit d'une valeur calculée de la puissance ($POW_{gaz,VGT}$) fournie à la turbine par les gaz détendus et d'une valeur calculée du rendement ($\eta_t$) de la turbine.

8. Procédé selon la revendication 7, **caractérisé en ce que** la puissance ($POW_{gaz,VGT}$) fournie par les gaz détendus est calculée suivant l'équation (E27) $POW_{gaz,VGT} = W_t T_{ut} c_{p,exh}\left( 1 - PR_t^{\frac{1-\gamma'}{\gamma'}} \right)$, dans laquelle

- $W_t$ est une valeur du débit massique de gaz traversant la turbine 27, calculée comme la somme, du débit massique d'air ($W_c$) traversant le compresseur et d'un débit massique de carburant ($W_{carb}$) brûlés dans le moteur,
- $T_{ut}$ est une valeur de la température des gaz à l'entrée de la turbine,
- $c_{p,exh}$ désigne la capacité calorifique à pression constante des gaz brûlés,
- $\gamma'$ désigne le rapport de la capacité calorifique à pression constante des gaz brûlés $c_{p,exh}$ divisée par la capacité calorifique à volume constant $c_{v,exh}$ des gaz brûlés, et
- $PR_t$ une valeur estimée du taux de détente de la turbine 27.

9. Procédé selon la revendication 7 ou 8, **caractérisé en ce que** le taux de détente ($PR_t$) de la turbine est calculé lors d'une sous-étape (210), à partir de la position ($u_{VGT}$) de l'actionneur (36) actionnant les ailettes, d'une fonction prédéterminée $S(u_{VGT})$ de la position ($u_{VGT}$) de l'actionneur (36), du débit de gaz ($W_t$), de la température ($T$) des gaz à l'entrée de la turbine et de la pression ($P_{dt}$) des gaz à la sortie de la turbine, sous-étape lors de laquelle on calcule :

- la valeur prise par la fonction $S(u_{VGT})$,

- une valeur du débit des gaz corrigé ($W_{t,cor}$) par l'équation (E21) $W_{t,cor} = W_t \sqrt{\dfrac{T_{td}}{T_{ref,t}}} \dfrac{P_{ref,t}}{P_{dt}}$ , dans laquelle

$T_{ref,t}$ et $P_{ref,t}$ désignent respectivement des valeurs constantes de température de référence et de pression de référence de la turbine (27), propres à une cartographie de débit ($f_{t,W}$) de la turbine,
- le rapport du débit corrigé ($W_{t,cor}$) divisée par la valeur prise par la fonction $S(u_{VGT})$,

- le taux de détente ($PR_t$) de la turbine par l'équation (E20) $PR_t = \phi_t^{-1}\left(\dfrac{W_{t,cor}}{S(u_{VGT})}\right)$ , dans laquelle $\phi_t^{-1}$

désigne la fonction inverse de la fonction $\phi_t(x) = \sqrt{x^{\frac{2}{\gamma}} - x^{-\frac{\gamma+1}{\gamma}}} \sqrt{x}$ .

10. Procédé selon la revendication 9, **caractérisé en ce que** la fonction $S(u_{VGT})$ est prédéterminée de manière expérimentale et à partir de l'équation (E18)$W_{t,cor} = S(u_{VGT})\phi_t(PR_t)$.

11. Procédé selon la revendication 10, **caractérisé en ce que** le rendement ($\eta_t$) de la turbine est calculé par une cartographie de rendement ($f_{t,\eta}$) de la turbine à trois entrées, à partir d'une valeur calculée d'un régime corrigé ($N_{t,cor}$) de la turbine, du taux de détente ($PR_t$) de la turbine et de la position ($u_{VGT}$) de l'actionneur (36) manoeuvrant les ailettes (35).

12. Procédé selon la revendication 11, **caractérisé en ce que** le régime corrigé ($N_{t,cor}$) de la turbine est calculé par l'équation (E24) $N_{t,cor} = N_{tc} \sqrt{\dfrac{T_{ref,t}}{T_{td}}}$ , dans laquelle $T_{ref,t}$ désigne une valeur de temperature de référence de la turbine, propre à la cartographie de rendement de la turbine ($f_{t,\eta}$).

13. Procédé selon la revendication 12, **caractérisé en ce que** la valeur du régime ($N_{tc}$) de rotation du turbocompresseur est calculée au cours d'une sous-étape (130) de l'étape de calcul de la première valeur estimée ($POW_{t,CPR}$) de la puissance de la turbine (27), par l'équation (E11) $N_{tc} = N_{c,cor} \sqrt{\dfrac{T_{tc}}{T_{ref,c}}}$ .

14. Moteur à combustion interne suralimenté (1) équipé d'un turbocompresseur à géométrie variable (2) pour la mise en oeuvre du procédé selon la revendication 1, **caractérisé en ce qu'**il est associé à au moins un moyen de détermination (37) de la position ($u_{VGT}$) de l'actionneur (36).

**Patentansprüche**

1. Verfahren zur Fehlerdiagnose eines aufgeladenen Verbrennungsmotors (1), der mit einem Turboverdichter (2) ausgestattet ist, welcher aufweist:

- einen Verdichter (9), der einen mit der Außenluft verbundenen Eingang und einen mit dem Einlass des Motors (1) verbundenen Ausgang aufweist,
- eine Turbine (27), die einen mit einem Abgaskrümmer (26) des Motors (1) verbundenen Eingang und einen Ausgang aufweist, und
- Schaufeln (35) mit variabler Ausrichtung, die von einem Stellorgan (36) betätigt werden, um Änderungen des Strömungsquerschnitts der Abgase in der Turbine (27) zu bewirken,

EP 2 699 778 B1

wobei die Turbine (27) und der Verdichter (9) durch eine gemeinsame Welle (34) drehfest verbunden sind, **dadurch gekennzeichnet, dass** es aufweist:

- einen ersten Schritt (100) der Berechnung eines ersten Schätzwertes ($POW_{t,CPR}$) der Leistung der Turbine (27), ausgehend von einer ersten Gesamtheit von Parametern, welche mindestens beinhaltet:

    a) den Druck ($P_{uc}$) der Luft am Eingang des Verdichters,
    b) den Ladedruck ($P_{dc}$),
    c) den Massendurchsatz ($W_c$) der Luft, die durch den Verdichter strömt, und
    d) die Temperatur ($T_{uc}$) der Luft am Eingang des Verdichters,

- einen zweiten Schritt (200) der Berechnung eines zweiten Schätzwertes ($POW_{t,VGT}$) der Leistung der Turbine (27), ausgehend von einer zweiten Gesamtheit von Parametern, welche mindestens beinhaltet:

    e) den Druck ($P_{dt}$) der Gase am Ausgang der Turbine,
    f) den Massendurchsatz ($W_t$) der Gase, die durch die Turbine strömen,
    g) die Temperatur ($T_{ut}$) der Gase am Eingang der Turbine,
    h) eine Position ($u_{VGT}$) des Stellorgans (36), das die Schaufeln (35) betätigt, und
    i) die Drehzahl ($N_{tc}$) des Turboverdichters (19),

- einen dritten Schritt (300) der Bestimmung eines Leistungsverhältnisses ($\varepsilon_t$), welches als das Verhältnis des zweiten Schätzwertes ($POW_{t,VGT}$) der Leistung der Turbine zu dem ersten Schätzwert ($POW_{t,CPR}$) der Leistung der Turbine berechnet wird,
- einen vierten Schritt (400) des Vergleichs des Leistungsverhältnisses ($\varepsilon_t$) mit einem Schwellenwert (S), und
- einen fünften Schritt (500) der Fehlerdiagnose des Motors (1), wenn das Leistungsverhältnis ($\varepsilon_t$) größer als der Schwellenwert (S) ist.

2. Verfahren nach Anspruch 1, **dadurch gekennzeichnet, dass** der erste Schätzwert ($POW_{t,CPR}$) der Leistung der Turbine als das Verhältnis eines berechneten Wertes der Leistung ($POW_{air,CPR}$), die von der durch den Verdichter verdichteten Luft aufgenommen wurde, zu einem berechneten Wert des Wirkungsgrades ($\eta_c$) des Verdichters berechnet wird.

3. Verfahren nach Anspruch 2, **dadurch gekennzeichnet, dass** die von der verdichteten Luft aufgenommene Leistung ($POW_{air,CPR}$) durch die Gleichung (E13) $POW_{air,CPR} = W_c T_{uc} c_{p,adm} \left( PR_c^{\frac{\gamma-1}{\gamma}} - 1 \right)$ berechnet wird, wobei $c_{p,adm}$ die Wärmekapazität der Luft bei konstantem Druck, $\gamma$ das Verhältnis der Wärmekapazität der Luft bei konstantem Druck, $c_{p,adm}$, zu der Wärmekapazität der Luft bei konstantem Volumen, $c_{v,adm}$, und $PR_c$ das Verdichtungsverhältnis des Verdichters, berechnet als das Verhältnis $\frac{P_{dc}}{P_{uc}}$, bezeichnet.

4. Verfahren nach Anspruch 2 oder 3, **dadurch gekennzeichnet, dass** der Wirkungsgrad ($\eta_c$) des Verdichters durch ein Wirkungsgradkennfeld ($f_{c,\eta}$) des Verdichters mit zwei Eingängen berechnet wird, ausgehend von einem berechneten Wert einer korrigierten Drehzahl ($N_{c,cor}$) des Verdichters und einem berechneten Wert eines korrigierten Luftdurchsatzes ($W_{c,cor}$).

5. Verfahren nach Anspruch 4, **dadurch gekennzeichnet, dass** der korrigierte Durchsatz ($W_{c,cor}$) des Verdichters durch die Gleichung (E7) $W_{c,cor} = W_c \sqrt{\frac{T_{uc}}{T_{ref,c}} \frac{P_{ref,c}}{P_{uc}}}$ berechnet wird, in welcher $T_{ref,c}$ und $P_{ref,c}$ konstante Werte von Referenztemperatur bzw. Referenzdruck des Verdichters bezeichnen, die für das Wirkungsgradkennfeld ($f_{c,\eta}$) des Verdichters charakteristisch sind.

6. Verfahren nach Anspruch 4 oder 5, **dadurch gekennzeichnet, dass** die korrigierte Drehzahl ($N_{c,cor}$) des Verdichters durch ein Drehzahlkennfeld ($f_{Nt}$) des Verdichters mit zwei Eingängen berechnet wird, ausgehend von dem Verdich-

15

tungsverhältnis *(PR_c)* des Verdichters und von dem korrigierten Luftdurchsatz $(W_{c,cor})$.

7. Verfahren nach einem der vorhergehenden Ansprüche, **dadurch gekennzeichnet, dass** der zweite Schätzwert $(POW_{t,VGT})$ der Leistung der Turbine als das Produkt eines berechneten Wertes der Leistung $(POW_{gaz,VGT})$, die der Turbine durch die entspannten Gase zugeführt wird, und eines berechneten Wertes des Wirkungsgrades $(\eta_t)$ der Turbine berechnet wird.

8. Verfahren nach Anspruch 7, **dadurch gekennzeichnet, dass** die Leistung $(POW_{gaz,VGT})$, die durch die entspannten Gase zugeführt wird, gemäß der Gleichung (E27) $POW_{gaz,VGT} = W_t T_{ut} c_{p,exh} \left( 1 - PR_t^{\frac{1-\gamma'}{\gamma'}} \right)$ berechnet wird, wobei

   - $W_t$ ein Wert des Massendurchsatzes der Gase ist, die durch die Turbine (27) strömen, berechnet als die Summe des Massendurchsatzes $(W_c)$ der durch den Verdichter strömenden Luft und eines Massendurchsatzes von in dem Motor verbranntem Kraftstoff $(W_{carb})$,
   - $T_{ut}$ ein Wert der Temperatur der Gase am Eingang der Turbine ist,
   - $c_{p,exh}$ die Wärmekapazität der verbrannten Gase bei konstantem Druck bezeichnet,
   - $\gamma'$ das Verhältnis der Wärmekapazität der verbrannten Gase bei konstantem Druck, $c_{p,exh}$, zu der Wärmekapazität der verbrannten Gase bei konstantem Volumen, $c_{v,exh}$, bezeichnet, und
   - $PR_t$ ein Schätzwert des Expansionsverhältnisses der Turbine (27) ist.

9. Verfahren nach Anspruch 7 oder 8, **dadurch gekennzeichnet, dass** das Expansionsverhältnis *(PR_t)* der Turbine in einem Teilschritt (210) berechnet wird, ausgehend von der Position $(u_{VGT})$ des Stellorgans (36), das die Schaufeln betätigt, einer vorbestimmten Funktion S $(u_{VGT})$ der Position $(u_{VGT})$ des Stellorgans (36), dem Durchsatz der Gase $(W_t)$, der Temperatur $(T_{ut})$ der Gase am Eingang der Turbine und dem Druck $(P_{dt})$ der Gase am Ausgang der Turbine, wobei in diesem Teilschritt berechnet werden:

   - der Wert, der von der Funktion S $(u_{VGT})$ angenommen wird,

   - ein Wert des korrigierten Durchsatzes der Gase $(W_{t,cor})$ durch die Gleichung (E21) $W_{t,cor} = W_t \sqrt{\dfrac{T_{ut}}{T_{ref,t}}} \dfrac{P_{ref,t}}{P_{dt}}$ ,

   in welcher $T_{ref,t}$ und $P_{ref,t}$ konstante Werte einer Referenztemperatur bzw. eines Referenzdrucks der Turbine (27) bezeichnen, die für das Wirkungsgradkennfeld $(f_{t,w})$ der Turbine charakteristisch sind,
   - das Verhältnis des korrigierten Durchsatzes $(W_{t,cor})$ zu dem Wert, der von der Funktion S$(u_{VGT})$ angenommen wird,

   - das Expansionsverhältnis *(PR_t)* der Turbine durch die Gleichung (E20) $PR_t = \phi_t^{-1}\left( \dfrac{W_{t,cor}}{S(u_{VGT})} \right)$ , in welcher

   $\phi_t^{-1}$ die inverse Funktion der Funktion $\phi_t(x) = \sqrt{x^{-\frac{2}{\gamma'}} - x^{-\frac{\gamma'+1}{\gamma'}}}\ \sqrt{x}$ bezeichnet.

10. Verfahren nach Anspruch 9, **dadurch gekennzeichnet, dass** die Funktion S$(u_{VGT})$ auf experimentellem Wege und ausgehend von der Gleichung (E18) $W_{t,cor}$ = S$(u_{VGT})\phi_t(PR_t)$ vorbestimmt wird.

11. Verfahren nach Anspruch 10, **dadurch gekennzeichnet, dass** der Wirkungsgrad $(\eta_t)$ der Turbine durch ein Wirkungsgradkennfeld $(f_{t,\eta})$ der Turbine mit drei Eingängen berechnet wird, ausgehend von einem berechneten Wert einer korrigierten Drehzahl $(N_{t,cor})$ der Turbine, dem Expansionsverhältnis *(PR_t)* der Turbine und der Position $(u_{VGT})$ des Stellorgans (36), das die Schaufeln (35) betätigt.

12. Verfahren nach Anspruch 11, **dadurch gekennzeichnet, dass** die korrigierte Drehzahl $(M_{t,cor})$ der Turbine durch die Gleichung (E24) $N_{t,cor} = N_{tc} \sqrt{\dfrac{T_{ref,t}}{T_{ut}}}$ berechnet wird, in welcher $T_{ref,t}$ einen Referenztemperaturwert der Turbine bezeichnet, der für das Wirkungsgradkennfeld $(f_{t,\eta})$ der Turbine charakteristisch ist.

**13.** Verfahren nach Anspruch 12, **dadurch gekennzeichnet, dass** der Wert der Drehzahl *(N_{tc})* des Turboverdichters in einem Teilschritt (130) des Schrittes der Berechnung des ersten Schätzwertes ($POW_{t,CPR}$) der Leistung der Turbine (27) durch die Gleichung (E11) $N_{tc} = N_{c,cor} \sqrt{\dfrac{T_{uc}}{T_{ref,c}}}$ berechnet wird.

**14.** Aufgeladener Verbrennungsmotor (1), der mit einem Turboverdichter mit variabler Geometrie (2) zur Durchführung des Verfahrens nach Anspruch 1 ausgestattet ist, **dadurch gekennzeichnet, dass** ihm mindestens ein Mittel zur Bestimmung (37) der Position ($u_{VGT}$) des Stellorgans (36) zugeordnet ist.

**Claims**

**1.** Method for diagnosing failure of a supercharged internal combustion engine (1), equipped with a supercharger (2) comprising:

   - a compressor (9) including an inlet linked to the outside air, and an outlet linked to the intake of the engine (1),
   - a turbine (27) including an inlet linked to an exhaust manifold (26) of the engine (1), and an outlet, and
   - fins (35) with variable orientation, actuated by an actuator (36) to vary the section of passage of the exhaust gases in the turbine (27),

the turbine (27) and the compressor (9) being linked in rotation by a common shaft (34), **characterized in that** it comprises:

   - a first step (100) of calculating a first estimated value ($POW_{t,CPR}$) of the power of the turbine (27) from a first set of parameters comprising at least:

      a) the pressure ($P_{uc}$) of the air at the inlet of the compressor,
      b) the supercharging pressure ($P_{dc}$),
      c) the mass flow rate ($W_c$) of the air passing through the compressor, and
      d) the temperature ($T_{uc}$) of the air at the inlet of the compressor,

   - a second step (200) of calculating a second estimated value ($POW_{t,VGT}$) of the power of the turbine (27) from a second set of parameters comprising at least:

      e) the pressure ($P_{dt}$) of the gases at the outlet of the turbine,
      f) the mass flow rate ($W_t$) of the gases passing through the turbine,
      g) the temperature ($T_{ut}$) of the gases at the inlet of the turbine,
      h) a position ($u_{VGT}$) of the actuator (36) actuating the fins (35), and
      i) the speed of rotation ($N_{tc}$) of the turbocharger (19),

   - a third step (300) of determining a power ratio ($\varepsilon_t$) calculated as the ratio of the second estimated value ($POW_{t,VGT}$) of the power of the turbine, divided by the first estimated value ($POW_{t,CPR}$) of the power of the turbine,
   - a fourth step (400) of comparing the power ratio ($\varepsilon_t$) with a threshold ($S$), and
   - a fifth step (500) of diagnosing failure of the engine (1) when the power ratio ($\varepsilon_t$) is above the threshold ($S$).

**2.** Method according to Claim 1, **characterized in that** the first estimated value ($POW_{t,CPR}$) of the power of the turbine is calculated as the ratio of a calculated value of the power absorbed ($POW_{air,CPR}$) by the compressed air by the compressor, divided by a calculated value of the efficiency ($\eta_c$) of the compressor.

**3.** Method according to Claim 2, **characterized in that** the power absorbed ($POW_{air,CPR}$) by the compressed air is calculated by the equation (E13) $POW_{air,CPR} = W_c T_{uc} c_{p,adm} \left( PR_c^{\frac{\gamma-1}{\gamma}} - 1 \right)$, in which $c_{p,adm}$ designates the heat capacity at constant pressure of the air, $\gamma$ the ratio of the heat capacity at constant pressure of the air $c_{p,adm}$ divided by the heat capacity at constant volume $c_{v,adm}$ of the air, and $PR_c$ the compression ratio of the compressor calculated

as the ratio $\dfrac{P_{dc}}{P_{uc}}$ .

4. Method according to Claim 2 or 3, **characterized in that** the efficiency ($\eta_c$) of the compressor is calculated by a mapping of efficiency ($f_{c,\eta}$) of the compressor with two inputs, from a calculated value of a corrected speed ($N_{c,cor}$) of the compressor and from a calculated value of a corrected air flow rate ($W_{c,cor}$).

5. Method according to Claim 4, **characterized in that** the corrected flow rate ($W_{c,cor}$) of the compressor is calculated by the equation (E7) $W_{c,cor} = W_c \sqrt{\dfrac{T_{uc}}{T_{ref,c}}} \dfrac{P_{ref,c}}{P_{uc}}$ , in which $T_{ref,c}$ and $P_{ref,c}$ respectively designate constant reference temperature and reference pressure values of the compressor, specific to the mapping of efficiency ($f_{c,\eta}$) of the compressor.

6. Method according to Claim 4 or 5, **characterized in that** the corrected speed ($N_{c,cor}$) of the compressor is calculated by a mapping of speed ($f_{Nt}$) of the compressor with two inputs, from the compression ratio ($PR_c$) of the compressor and the corrected air flow rate ($W_{c,cor}$).

7. Method according to any one of the preceding claims, **characterized in that** the second estimated value ($POW_{t,VGT}$) of the power of the turbine is calculated as the product of a calculated value of the power ($POW_{gaz,VGT}$) supplied to the turbine by the expanded gases and of a calculated value of the efficiency ($\eta_t$) of the turbine.

8. Method according to Claim 7, **characterized in that** the power ($POW_{gaz,VGT}$) supplied by the expanded gases is calculated according to the equation (E27) $POW_{gaz,VGT} = W_t T_{ut} c_{p,exh} \left( 1 - PR_t^{\frac{1-\gamma'}{\gamma'}} \right)$ , in which

- $W_t$ is the value of the mass flow rate of gas passing through the turbine (27), calculated as the sum of the mass flow rate of air ($W_c$) passing through the compressor and of a mass flow rate of fuel ($W_{carb}$) burned in the engine,
- $T_{ut}$ is a value of the temperature of the gases at the inlet of the turbine,
- $c_{p,exh}$ designates the heat capacity at constant pressure of the burned gases,
- $\gamma'$ designates the ratio of the heat capacity at constant pressure of the burned gases $c_{p,exh}$ divided by the heat capacity at constant volume $c_{v,exh}$ of the burned gases, and
- $PR_t$ an estimated value of the expansion ratio of the turbine (27).

9. Method according to Claim 7 or 8, **characterized in that** the expansion ratio $(PR_t)$ of the turbine is calculated in a sub-step (210), from the position ($u_{VGT}$) of the actuator (36) actuating the fins, a predetermined function S($u_{VGT}$) of the position ($u_{VGT}$) of the actuator (36), the gas flow rate ($W_t$), the temperature $(T_{ut})$ of the gases at the inlet of the turbine and the pressure $(P_{dt})$ of the gases at the outlet of the turbine, a sub-step in which there are calculated:

- the value taken by the function S($u_{VGT}$),

- a value of the corrected gas flow rate ($W_{t,cor}$) by the equation (E21) $W_{t,cor} = W_t \sqrt{\dfrac{T_{ut}}{T_{ref,t}}} \dfrac{P_{ref,t}}{P_{dt}}$ , in which $T_{ref,t}$ and $P_{ref,t}$ respectively designate constant reference temperature and reference pressure values of the turbine (27) specific to a mapping of flow rate ($f_{t,w}$) of the turbine,
- the ratio of the corrected flow rate ($W_{t,cor}$) divided by the value taken by the function S($u_{VGT}$),

- the expansion ratio $(PR_t)$ of the turbine by the equation (E20) $PR_t = \phi_t^{-1}\left( \dfrac{W_{t,cor}}{S(u_{VGT})} \right)$ , in which $\phi_t^{-1}$ designates

the inverse function of the function $\phi_t(x) = \sqrt{x^{-\frac{2}{\gamma'}} - x^{-\frac{\gamma'+1}{\gamma'}}} \sqrt{x}$ .

10. Method according to Claim 9, **characterized in that** the function S($u_{VGT}$) is predetermined by trial and error and from the equation (E18) $W_{t,cor} = S(u_{VGT})\phi_t(PR_t)$.

11. Method according to Claim 10, **characterized in that** the efficiency ($\eta_t$) of the turbine is calculated by a mapping of efficiency ($f_{t,\eta}$) of the turbine with three inlets, from a calculated value of a corrected speed ($N_{t,cor}$) of the turbine, the expansion ratio *(PR$_t$)* of the turbine and the position ($u_{VGT}$) of the actuator (36) manoeuvring the fins (35).

12. Method according to Claim 11, **characterized in that** the corrected speed ($N_{t,cor}$) of the turbine is calculated by the equation (E24) $N_{t,cor} = N_{tc}\sqrt{\dfrac{T_{ref,t}}{T_{ut}}}$ , in which $T_{ref,t}$ designates a reference temperature value of the turbine specific to the mapping of efficiency of the turbine ($f_{t,\eta}$).

13. Method according to Claim 12, **characterized in that** the value of the speed *(N$_{tc}$)* of rotation of the turbocharger is calculated during a sub-step (130) of the step of calculation of the first estimated value *(POW$_{t,CPR}$)* of the power of the turbine (27), by the equation (E11) $N_{tc} = N_{c,cor}\sqrt{\dfrac{T_{uc}}{T_{ref,c}}}$ .

14. Supercharged internal combustion engine (1) equipped with a turbocharger with variable geometry (2) for the implementation of the method according to Claim 1, **characterized in that** it is associated with at least one means for determining (37) the position ($u_{VGT}$) of the actuator (36).

Fig. 1

(E1)      $PR_c = \dfrac{P_{dc}}{P_{uc}}$      — 110

— 100

$\downarrow PR_c$

(E5)      $\eta_c = f_{c,\eta}(N_{c,cor}, W_{c,cor})$      — 120

$\downarrow \eta_c$

(E11)      $N_{tc} = N_{c,cor}\sqrt{\dfrac{T_{uc}}{T_{ref,c}}}$      — 130

$\downarrow N_{tc}$

(E17)      $POW_{t,CPR} = W_c \cdot T_{uc} \cdot \dfrac{1}{\eta_c} C_{p,adm}\left(PR_c^{\frac{\gamma-1}{\gamma}} - 1\right)$      — 140

$\downarrow POW_{t,CPR}$

S      — 210

$\downarrow S(u_{VGT})$

(E20)      $PR_t = \Phi_t^{-1}\left(\dfrac{W_{t,cor}}{S(u_{VGT})}\right)$      — 220

$\downarrow PR_t$

(E23)      $\eta_t = f_{t,\eta}(N_{t,cor}, PR_t, u_{VGT})$      — 230

— 200

$\downarrow \eta_t$

(E28)      $POW_{t,VGT} = W_t \cdot T_{ut} \cdot \eta_t \, C_{p,exh}\left(1 - PR_t^{\frac{1-\gamma'}{\gamma'}}\right)$      — 240

$\downarrow POW_{t,VGT}$

%      — 300

$\boxed{S}$

>      — 400

— 500

**Fig. 2**

**EP 2 699 778 B1**

## RÉFÉRENCES CITÉES DANS LA DESCRIPTION

**Documents brevets cités dans la description**

- DE 102007052453 A
- DE 102007036936 A

- FR 2923262 A